# EUROPÄISCHE PATENTSCHRIFT

(11) **EP 3 597 032 B1**
(45) Veröffentlichungstag und Bekanntmachung des Hinweises auf die Patenterteilung: **03.03.2021**
(21) Anmeldenummer: 19186963.5
(22) Anmeldetag: 18.07.2019
(51) Int. Cl.: A01G 3/025, A01G 3/08

(54) **SÄGEVORSATZ FÜR EINE BAUMSCHERE**
SAW BLADE ATTACHMENT
ADAPTATEUR DE SCIE POUR UN SÉCATEUR

(30) Priorität: 19.07.2018 DE 102018005709
(43) Veröffentlichungstag der Anmeldung: 22.01.2020
(73) Patentinhaber: MTD Products Inc., Valley City, OH 44280 (US)
(72) Erfinder: Held, Peter, 57584 Scheuerfeld (DE)
(74) Vertreter: Pfrang, Tilman

(56) Entgegenhaltungen:
- EP-A1- 3 017 686
- DE-U1-202011 051 759
- KR-B1- 101 416 802

## Beschreibung

Die Erfindung bezieht sich auf einen Sägevorsatz für eine Baumschere der im Oberbegriff des Anspruchs 1 genannten Art.

Beim Astschnitt mit Baumscheren tritt immer wieder die Situation auf, dass die Schere an die Grenze ihres Schneidvermögens gelangt und dass für den Schnitt einiger besonders dicker Äste eine Säge erforderlich ist.

Da derartige Baumscheren bereits mit einem langen, gegebenenfalls teleskopisch ausgebildeten Stiel versehen sind, ist es naheliegend, auch an diesem Stiel oder der Astschere selbst eine Säge anzubringen.

So ist es aus der DE 8127569 U bekannt, an einem der Messer der Baumschere eine Bohrung vorzusehen, in die eine Befestigungsschraube für ein Sägeblatt eingesetzt werden kann. Hierbei ist ein erheblicher Zeitbedarf für die Umrüstung der Baumschere auf eine Säge erforderlich. Da hierbei zumeist eine Flügelmutter verwendet wird, kann diese inbesondere beim Arbeiten in dichtem Astwerk zu einem Lösen der Mutter und damit zu einer Gefährdung durch ein Herabfallen der Säge führen. Außerdem bleibt die Benutzung der Baumschere beziehungsweise der Säge unhandlich.

Aus der DE 1681086 U ist weiterhin eine Baumschere bekannt, bei der eine Säge an einem Messer der Baumschere schwenkbar befestigt und durch Arretiereinrichtungen arretierbar ist, wobei die Säge bei Nichtgebrauch an dem Stiel der Baumschere abgeklappt werden kann. Obwohl durch die schwenkbare Verbindung die Gefahr eines Lösens der Schraubverbindung beseitigt ist, ergibt diese Säge ein Hindernis beim Gebrauch der Baumschere insbesondere in dichtem Geäst, da sich hierbei die Säge in dem Astwerk verfangen kann.

Aus der WO 2008/095516 A1 ist eine an dem freien Ende eines Handgriffes einer Hand-Baumschere ausklappbar befestigte Säge bekannt, die beim Öffnen von einer Ruheposition in eine Sägeposition bringbar ist. Dabei bildet die Baumschere selbst den Handgriff für die Säge, was jedoch relativ unbequem ist.

KR 101 416 802 B1 offenbart eine gattungsgemäße Baumschere mit einem Sägevorsatz nach dem Oberbegriff des Anspruchs 1.

Der Erfindung liegt die Aufgabe zugrunde, einen Sägevorsatz für eine Baumschere zu schaffen, die in einfacher und sicherer Weise an der Baumschere zu befestigen ist und nur geringe Vergrößerungen des Querschnitts der Baumschere ergibt.

Diese Aufgabe wird durch die im Patentanspruch 1 angegebene Erfindung gelöst.

Vorteilhafte Ausgestaltungen und Weiterbildungen der Erfindung ergeben sich aus den Unteransprüchen.

Der erfindungsgemäße Sägevorsatz ist für das Aufstecken auf eine Baumschere ausgebildet, die einen Messerkopf mit Messern aufweist, die über eine Gelenkschraube gelenkig miteinander verbunden und zwischen einer offenen und einer Schneidstellung verschwenkbar sind.

Der Sägevorsatz weist einen Befestigungsteil zur Befestigung eines Sägeblatts an einem Teil des Messerkopfs der Baumschere auf. Der Befestigungsteil ist durch einen auf beide Messer in deren offenen Stellung aufsteckbaren flachen taschenförmigen Befestigungsteil gebildet, der Schlitze zur Aufnahme der Messer an einer ersten seiner Schmalseiten aufweist, während auf der der ersten Schmalseite gegenüberliegenden Schmalseite Befestigungsschlitze für das dem Messerkopf zugewandte Ende des Sägeblatts vorgesehen sind. Hierbei sind Rasteinrichtungen zur lösbaren Rastbefestigung des Befestigungsteils an dem Messerkopf vorgesehen.

Der Befestigungsteil ist vorzugsweise durch zwei Halbschalen gebildet, die auf der ersten Schmalseite die Schlitze für die Aufnahme der Messer aufweisen und auf der zweiten, der ersten Schmalseite gegenüberliegenden Schmalseite einen Schlitz zur Aufnahme des Sägeblatts aufweisen, wobei Befestigungsschrauben zur Befestigung der beiden Halbschalen aneinander vorgesehen sind, und die Halbschalen einen Hohlraum bilden, der einerseits zur Aufnahme der Messer und andererseits zur Aufnahme des Sägeblatts ausgebildet ist.

Gemäß einer Ausführungsform sind die Rasteinrichtungen durch einen die Gelenkschraube oder deren Mutter verlängernden Ansatz und ein langgestrecktes Rastelement gebildet, das an dem Befestigungsteil befestigt ist, sich über die erste Schmalseite des Befestigungsteils hinaus in Richtung auf den Messerkopf erstreckt und am freien Ende eine Öffnung aufweist, die auf den Ansatz aufrastbar ist.

Das langgestreckte Rastelement kann durch eine elastische Blattfeder gebildet sein, die an dem Befestigungsteil befestigt und auf den Ansatz der Gelenkschraube elastisch vorgespannt ist. An dem Messerkopf können hierbei lösbare Sicherungseinrichtungen zur Sicherung des langgestreckten Bauteils auf dem Ansatz der Gelenkschraube oder deren Mutter vorgesehen sein.

Das Rastelement kann auch durch einen in der zweiten Halbschale schwenkbar befestigten Kipphebel mit einem Ansatz in eine Position verschwenkbar sein, in der die Öffnung von dem Ansatz der Gelenkschraube oder deren Mutter abgehoben ist.

Gemäß einer weiteren Ausführungsform ist das Rastelement durch ein starres, langgestrecktes Bauteil gebildet, das sich über die erste Schmalseite des hinaus erstreckt und wiederum eine Öffnung zur Aufnahme des Ansatzes der Gelenkschraube oder deren Mutter aufweist. Hierbei sind Spanneinrichtungen zum Spannen des langgestreckten Bauteils gegen eine Außenfläche des Befestigungsteils und damit auf den Ansatz der Gelenkschraube oder deren Mutter vorgesehen.

Die Spanneinrichtungen können gemäß einer Ausführungsform durch einen an dem starren langgestreckten Bauteil im Bereich des Befestigungsteils befestigten Gewindebolzen gebildet sein, der sich durch die erste Halbschale hindurch erstreckt, wobei auf der Außenseite der zweiten Halbschale eine Ausnehmung vorgesehen ist, durch die hindurch sich ein Drehknopf erstreckt, der eine damit verbundene Mutter aufweist, die auf den Gewindebolzen aufschraubbar ist und im fest aufgeschraubten Zustand das Bauteil gegen die Halbschale zieht, während im abgeschraubten Zustand der Mutter der Drehknopf durch eine Feder aus der zweiten Gehäuseschale heraus vorgespannt ist. Durch Eindrücken des Drehknopfes in die zweite Gehäuseschale wird das Rastelement von dem Ansatz der Gelenkschraube oder deren Mutter abgehoben, so dass der Befestigungsteil von den Messern abziehbar ist.

Gemäß einer weiteren Ausführungsform sind die Messer mit jeweiligen Bohrungen versehen, durch die hindurch sich Verriegelungsbolzen erstrecken können, die in zumindest einer der Halbschalen in einer Ebene senkrecht zur Ebene der Messer angeordnet sind und durch die Bohrungen hindurch einsetzbar sind, so dass sie den Befestigungsteil an den Messern festlegen.

Gemäß einer Ausführungsform sind die Verriegelungsbolzen hierbei starr in der ersten Gehäusehälfte angeordnet und erstrecken sich bei aufgesetztem Befestigungsteil durch die Öffnungen der Messer hindurch. Die zweite Halbschale ist in diesem Fall durch einen an der ersten Halbschale drehbar befestigten Knebel gebildet, der Aussparungen zur Aufnahme der sich über die Messer hinaus erstreckenden Enden der Verriegelungsbolzen aufweist und zwischen einer ersten Stellung, in der der Knebel zwischen den Messern liegt, und einer zweiten Stellung verdrehbar ist, in der die Ausnehmungen die freien Enden der Stifte aufnehmen und der Knebel gegen die benachbarte Fläche der Messer anliegt und damit die Verriegelungsbolzen in den Bohrungen der Messer verriegelt.

Bei einer anderen Ausführungsform mit Bohrungen in den Messern ist im Inneren des Befestigungsteils ein U-förmiges Arretierteil angeordnet, das Verriegelungsbolzen für den Eingriff in die Bohrungen der Messer und einen Druckknopf aufweist, der in einer Ausnehmung der zweiten Halbschale in einer Richtung unter einem rechten Winkel zur Ebene der Messer derart beweglich angeordnet ist, dass ein Eindrücken des Druckknopfes und damit des Arretierteils in die erste Halbschale das Lösen der Befestigungsbolzen aus den Bohrungen heraus ermöglicht.

Hierbei kann die erste Halbschale eine mit einer Schulter auf ihrer Außenseite versehene Durchbrechung aufweisen, in der ein Drehknopf angeordnet ist, der an seinem innenliegenden Ende eine Scheibe mit Stiften aufweist. Eine Feder ist zwischen der Scheibe und dem U-förmigen Arretierteil angeordnet und spannt den Druckknopf aus der zweiten Gehäuseschale heraus vor, wobei die Stifte in einer ersten Drehstellung des Drehknopfes gegen die Innenseite des U-förmigen Arretierteils anliegen und ein Eindrücken des Druckknopfes verhindern, während die Stifte in einer zweiten Drehstellung des Drehknopfes an den Längskanten des U-förmigen Verriegelungsteils vorbei bewegbar sind und ein Eindrücken des Druckknopfes ermöglichen.

Ausführungsbeispiele der Erfindung werden nachfolgend anhand der Zeichnungen noch näher erläutert.

In den Zeichnungen zeigen:
- Figur 1: den grundlegenden Aufbau einer Ausführungsform des Sägevorsatzes und seines Befestigungsvorsatzes zusammen mit einem Beispiel einer Baumschere in einer voneinander getrennten Position;
- Figur 2: den Sägevorsatz in auf die Messer der Baumschere aufgesteckten Position;
- Figur 3: eine erste Ausführungsform der Verriegelungsvorrichtung zur Befestigung des Befestigungsteils an der Baumschere;
- Figur 4: die Ausführungsform nach Figur 3 mit auf die Baumschere aufgestecktem Sägevorsatz;
- Figur 5: eine zweite Ausführungsform der Verriegelungsvorrichtung zur Befestigung des Befestigungsteils an der Baumschere;
- Figur 6: die Ausführungsform nach Figur 5 mit auf die Baumschere aufgestecktem Sägevorsatz, wobei die hintere Halbschale teilweise von dem Sägeblatt gebildet ist;
- Figur 7: eine dritte Ausführungsform der Verriegelungsvorrichtung zur Befestigung des Befestigungsteils an der Baumschere;
- Figur 8: eine Schnittansicht der Ausführungsform nach Figur 7 entlang der Linie A-A nach Figur 7;
- Figur 9: eine Ansicht des Befestigungsteils der dritten Ausführungsform;
- Figur 10: eine Schnittansicht entlang der Linie B-B nach Figur 9, die die Verriegelungsvorrichtung in der verriegelten Stellung zeigt;
- Figur 11: eine Schnittansicht entlang der Linie B-B nach Figur 9, die die Verriegelungsvorrichtung in der gelösten, jedoch verriegelten Stellung zeigt;
- Figur 12: eine Schnittansicht entlang der Linie B-B nach Figur 9, die die Verriegelungsvorrichtung in der gelösten und entriegelten Stellung zeigt, in der sie von den Messern abgezogen werden kann;
- Figur 13: eine vierte Ausführungsform der Verriegelungsvorrichtung zur Befestigung des Befestigungsteils an der Baumschere;
- Figur 14: eine Schnittansicht der Ausführungsform nach Figur 13 entlang der Linie C-C nach Figur 13 im verriegelten Zustand;
- Figur 15: eine Teilansicht des Befestigungsteils nach den Figur 13 und 14, die die Verriegelungsvorrichtung in der entriegelten Stellung zeigt, in der er von den Messern abgezogen werden kann;
- Figur 16: eine fünfte Ausführungsform der Verriegelungsvorrichtung zur Befestigung des Befestigungsteils an der Baumschere im verriegelten Zustand;
- Figur 17: eine Schnittansicht der Ausführungsform nach Figur 16 entlang der Linie E-E nach Figur 16 im verriegelten Zustand;
- Figur 18: eine Schnittansicht der Ausführungsform nach Figur 16 entlang der Linie D-D nach Figur 16 im verriegelten Zustand;
- Figur 19: eine Ansicht der Baumschere mit hiervon abgezogenen Befestigungsteil im entriegelten Zustand;
- Figur 20: eine sechste Ausführungsform der Verriegelungsvorrichtung;
- Figur 21: eine Ansicht von oben auf die Ausführungsform nach Figur 20;
- Figur 22: eine Zuordnung der Messer zu dem inneren Aufbau des Befestigungsteils nach Figur 23;
- Figur 23: einen Schnitt entlang der Linie F-F nach Figur 21:
- Figur 24: eine Ansicht der Rückseite des Messerkopfes mit aufgestecktem Befestigungsteil in einer ersten Stellung des Drehknopfes bei verriegeltem Sägeblatt;
- Figur 25: eine Ansicht der Rückseite des Messerkopfes mit aufgestecktem Befestigungsteil in einer zweiten Stellung des Drehknopfes bei entriegeltem Sägeblatt;
- Figur 26: eine teilweise geschnittene Ansicht entlang der Linie A-A in Figur 24;
- Figur 27: eine teilweise geschnittene Ansicht entlang der Linie B-B in Figur 25;
- Figur 28: eine Schnittansicht entlang der Linie C-C nach Figur 25;
- Figur 29: eine auseinandergezogene Ansicht des Befestigungsteils nach den Figuren 20 - 28.

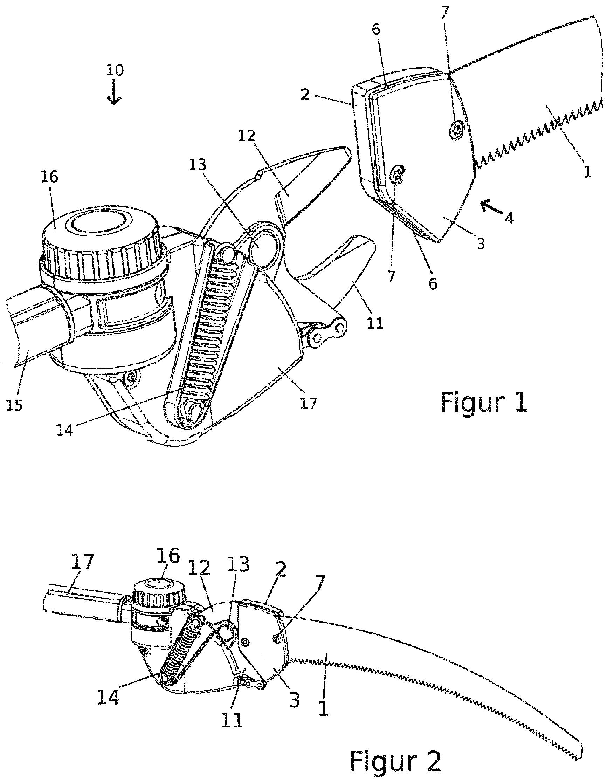

In den Figuren 1 und 2 ist der grundlegende Aufbau einer Ausführungsform des Sägevorsatzes gezeigt, der eine Säge 1 mit einem Befestigungsteil 4 aufweist, der durch eine linke Halbschale 2 und eine rechte Halbschale 3 gebildet ist. In den Figuren ist lediglich als Beispiel ein Messerkopf 10 einer Baumschere gezeigt, die durch eine beliebige Baumschere mit zwei um eine Gelenkschraube 13 verschwenkbaren Messern 11, 12 gebildet sein kann, die in einem Gehäuse 17 der Baumschere 10 angeordnet und durch eine Rückholfeder 14 in Öffnungsrichtung vorgespannt sind.

Dieses Beispiel der Baumschere weist einen um ein Schwenkgelenk 16 schwenkbar an einem Stiel 15 befestigten Messerkopf auf, kann jedoch auch starr an diesem befestigt sein. Der Stiel 15 kann das freie Ende eines Teleskopstiels sein.

Wie dies aus Figur 1 zu erkennen ist, weist das durch die Halbschalen 2, 3 gebildete taschenförmige Gehäuse des Befestigungsteils 4 in der dem Messerkopf 10 zugewandten ersten Schmalseite Schlitze 6 auf, die an die Form und Größe sowie die Anordnung der Messer 11, 12 angepasst sind, so dass der Befestigungsteil 4 auf die Messer 11, 12 aufgesteckt werden kann. Die Halbschalen 2, 3 sind über Schrauben 7 oder andere Befestigungsmittel miteinander verbunden. Der Befestigungsteil 4 bildet somit eine Art Tasche für die Messer 11, 12, die darin über nicht gezeigte Führungsrippen formschlüssig geführt sind. Das dem Messerkopf 10 zugewandte Ende des Sägeblatts 1 erstreckt sich durch einen Schlitz in der der ersten Schmalseite entgegengesetzten Schmalseite in den Befestigungsteil 4.

Es sind in den Figuren 1 und 2 nicht dargestellte Rast- oder Verriegelungseinrichtungen vorgesehen, die den Befestigungsteil 4 und damit das Sägeblatt 1 sicher an den Messern 11, 12 des Messerkopfes 10 halten.

Vorteilhafte Ausführungsformen des Befestigungsteils 4 und der Rast- oder Verriegelungseinrichtungen werden in der nachfolgenden Beschreibung näher erläutert.

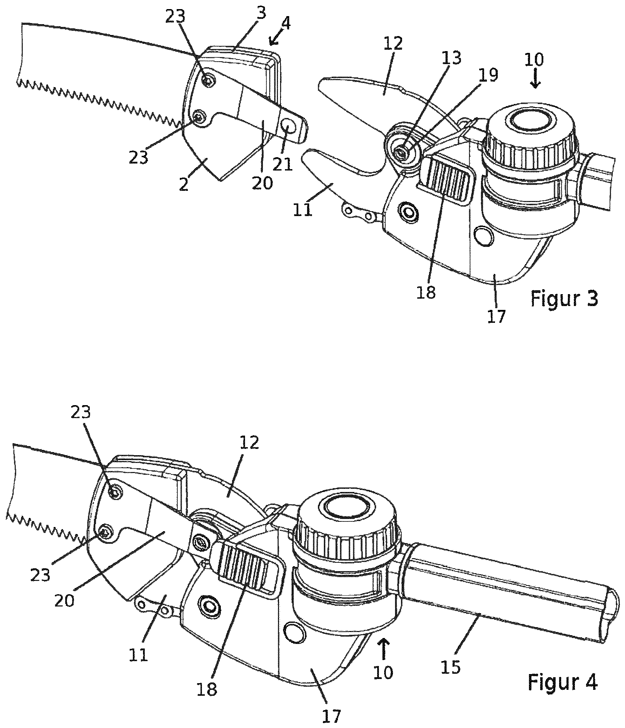

In den Figuren 3 und 4 ist eine einfache Ausführungsform der Rast- und Verriegelungseinrichtungen zur Verriegelung des Befestigungsteils 4 an den Messern 11, 12 gezeigt. Die beiden Messer 11, 12 sind über eine Gelenkschraube 13 mit einer Mutter gelenkig miteinander verbunden, von denen die Gelenkschraube 13 oder deren Mutter einen vorspringenden Zapfen 19 aufweist, auf den eine an dem Befestigungsteil 4 über Schrauben 23 befestigte Blattfeder 20 mit einer den Zapfen 19 aufnehmenden Öffnung 21 aufrastbar befestigt ist. Falls dies aus Sicherheitsgründen erwünscht ist, kann diese Blattfeder 20 durch einen an dem Gehäuse 17 des Messerkopfes 10 verschiebbar befestigten Schieber 18, der über das freie Ende der Blattfeder 20 geschoben werden kann, zusätzlich im eingerasteten Zustand gesichert werden.

Hierbei ist es bei einer vorhandenen Baumschere lediglich erforderlich, die die Messer 11, 12 verbindende Gelenkschraube 13 oder deren Mutter gegen eine einen Zapfen 19 aufweisende Schraube oder Mutter zu ersetzen, um die Befestigung des Sägeblatts 1 über den Befestigungsteil 4 an den Messern 11, 12 des Messerkopfes 10 zu ermöglichen.

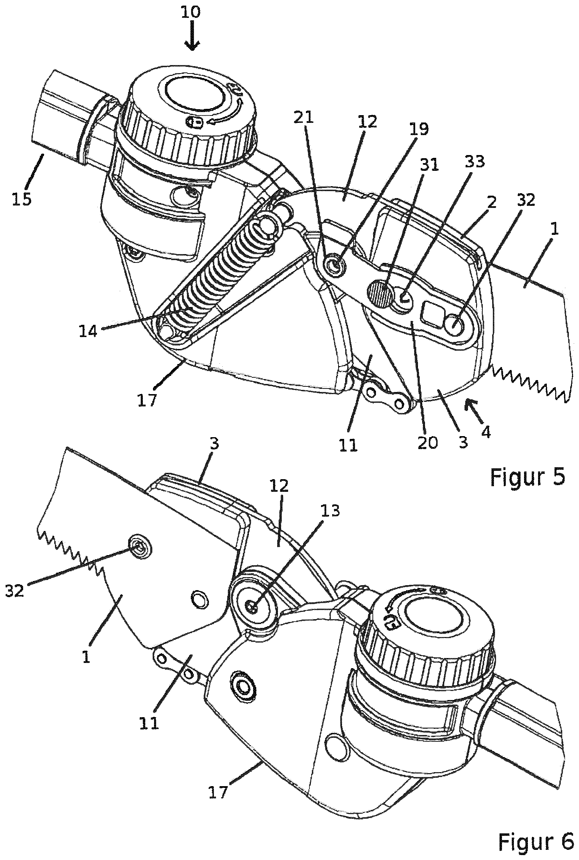

Bei der Ausführungsform nach den Figuren 5 und 6 sind die Rast- und Verriegelungseinrichtungen ebenfalls durch einen von der Gelenkschraube 13 oder deren Mutter vorspringenden Zapfen 19 gebildet, auf den eine Öffnung 21 an einem freien Ende einer nach außen gewölbten Blattfeder 20 aufrastbar ist, deren entgegengesetztes Ende an dem Befestigungsteil 4 über einen Niet oder eine Schraube 32 befestigt ist, der bzw. die auch die Halbschalen 2, 3 und das Sägeblatt 1 miteinander verbinden kann. In einer Schlüsselloch-artigen Öffnung 33 der Blattfeder 20 ist ein in der Halbschale 3 entlang der Blattfeder 20 verschiebbar angeordneter Bolzen mit einem Kopf 31 angeordnet, der in der auf den verengten Abschnitt der Öffnung 33 aufgeschobenen Stellung das freie Ende mit der Öffnung 21 auf den Zapfen 19 vorspannt und auf diesem arretiert, wie dies in Figur 5 gezeigt ist. Durch Verschieben des Kopfes 31 über den erweiterten Abschnitt der Öffnung 33 der Blattfeder 20 kann der Kopf 31 die Öffnung 33 passieren, so dass sich das freie Ende dieser Blattfeder 20 von dem Ansatz 19 des Gelenkbolzens 13 löst.

Wie die Figur 6 zeigt, kann das Sägeblatt 1 auch auf der den Rast- und Verriegelungseinrichtungen 20 gegenüberliegenden Hauptfläche des Befestigungsteils 4 befestigt werden, d.h. nicht innerhalb des Befestigungsteils.

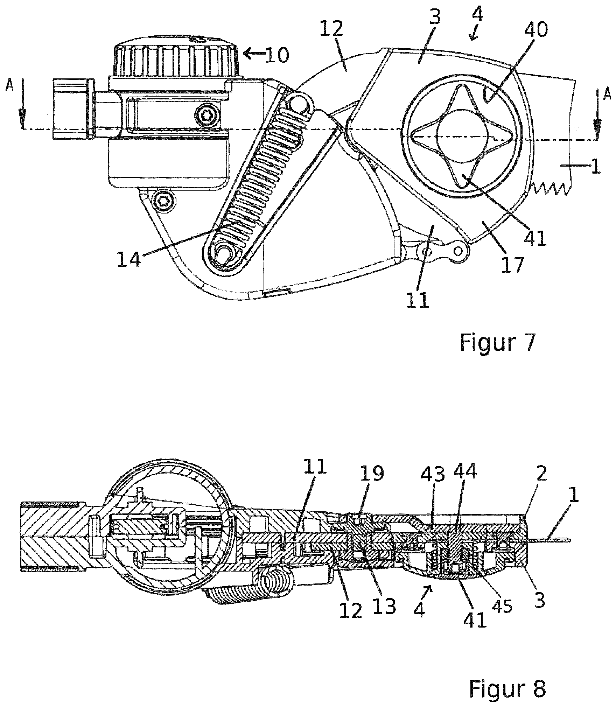

Bei der Ausführungsform nach den Figuren 7 bis 12 ist die Blattfeder der vorhergehenden Ausführungsbeispiele durch ein starres langgestrecktes Rastelement 43 ersetzt, das sich über die dem Messerkopf 10 zugewandte Schmalseite des Befestigungsteils 4 hinaus erstreckt und wiederum eine Öffnung 21 für die Aufnahme auf dem Zapfen 19 der Gelenkschraube 13 oder dessen Mutter aufweist. In der Gehäuseschale 3 ist eine Ausnehmung 40 vorgesehen, in der ein Drehknopf 41 versenkt angeordnet ist.

Ein Gewindebolzen 44 ist zentrisch in der Ausnehmung 40 angeordnet, starr mit dem Rastelement 43 verbunden und in dem Befestigungsteil 4 axial verschiebbar. Der Drehknopf 41 ist auf dem Gewindebolzen 44 angeordnet und weist eine damit verbundene und auf den Gewindebolzen 44 aufgeschraubte Mutter 45 auf. Der Drehknopf 41 ist durch eine Feder 42 in einer Richtung aus der Gehäuseschale 3 heraus vorgespannt, in der die Öffnung 21 des Rastelements 43 auf den Zapfen 19 aufrastet.

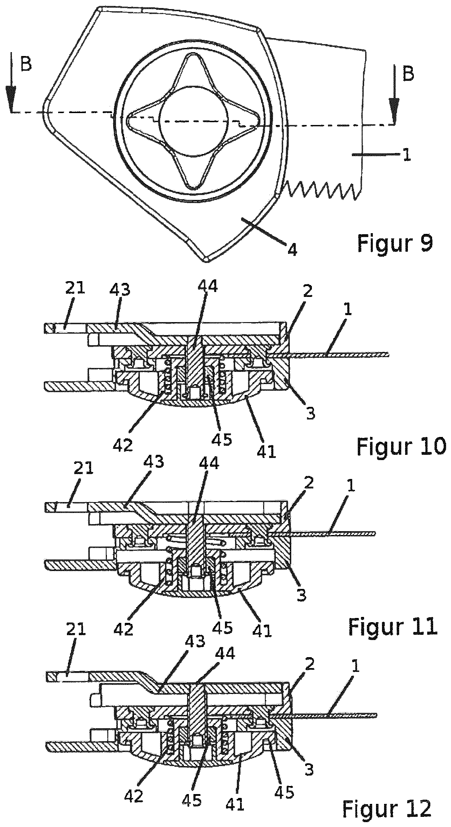

Durch Drehen des Drehknopfes 41 im Uhrzeigersinn nach Figur 7 wird dessen Mutter 45 auf dem Gewindebolzen 44 weiter aufgeschraubt und zieht das Rastelement 43 fest an die Halbschale 2, wie dies im Schnitt entlang der Linie B-B in Figur 10 gezeigt ist. Bei einer Drehung im Gegenuhrzeigersinn wird die Mutter 45 des Drehknopfes von dem Gewindebolzen 44 abgeschraubt und der Drehknopf entfernt sich von der Gehäusehälfte 2 und springt aus der Halbschale 3 vor, wie dies in Figur 11 gezeigt ist. Durch Eindrücken des Drehknopfes 41 in die Halbschale 3 und in Richtung auf die Halbschale 2 wird dann eine Trennung des Rastelementes 43 von dem Zapfen 19 der Gelenkschraube 13 erreicht, so dass der Sägevorsatz von den Messern 11, 12 der Baumschere abgezogen werden kann, wie dies in Figur 12 dargestellt ist.

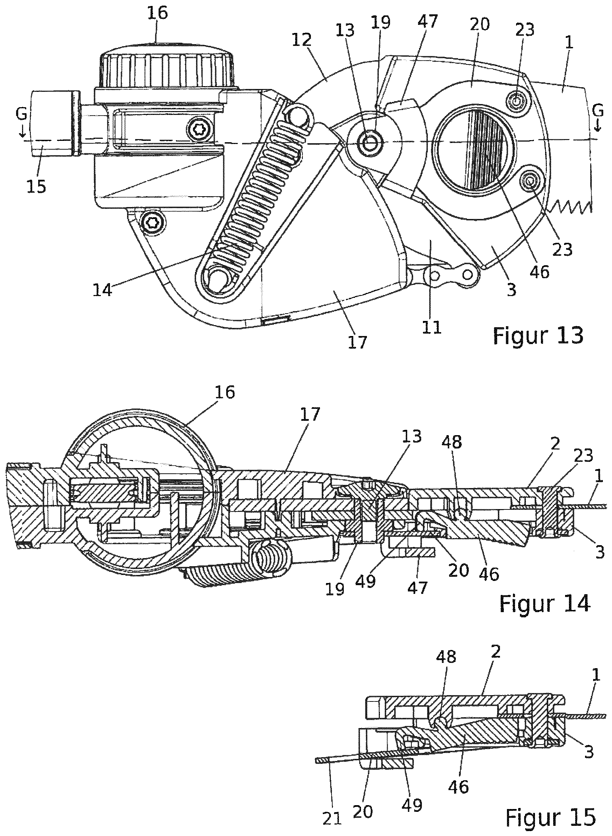

In den Figuren 13 bis 15 ist eine vierte Ausführungsform der Rastbefestigung gezeigt, bei der eine Y-förmige Verriegelungsfeder über Befestigungsschrauben 23 an den durch die Halbschalen 2, 3 gebildeten Befestigungsteil 4 befestigt ist, wobei das freie Ende des Fußteils des "Y" wiederum eine Öffnung 21 aufweist, die auf einen Ansatz 19 der Gelenkschraube 13 oder deren Mutter aufrastbar ist.

In den Figuren 14 und 15 ist der bereits in Figur 13 dargestellte Kipphebel 46 mit weiteren Einzelheiten gezeigt. Der Kipphebel 46 ist über einen bolzenförmigen Ansatz 48 in einer Ausnehmung der Halbschale 2 verschwenkbar. Dieser Kipphebel weist auf der in Figur 14 linken Seite einen Betätigungsansatz 49 auf, der beim Verschwenken von der in Figur 14 gezeigten Stellung auf die in Figur 15 gezeigte Stellung auf den Fußteil des "Y" drücken und diesen von dem Zapfen 19 abheben kann, wie dies in Figur 15 gezeigt ist.

Durch Niederdrücken des Kipphebels 46 kann damit die Blattfeder von dem Ansatz 19 gelöst werden und der Befestigungsteil kann von den Messern abgezogen werden.

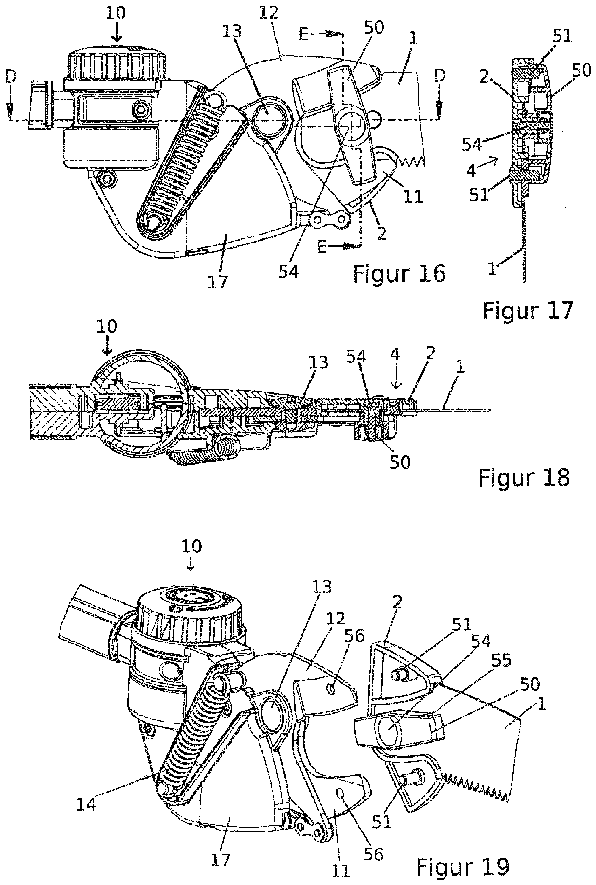

In den Figuren 16 bis 19 ist eine sechste Ausführungsform der Rasteinrichtungen dargestellt, bei der die Rastbefestigung nicht an der Gelenkschraube 13 erfolgt, die das Gelenk zwischen den Messern 11 und 12 bildet, sondern über Bohrungen 56 in den Messern, in die Bolzen 51 eingreifen können, die in der Halbschale 2 angeordnet sind. Diese Bolzen erstrecken sich durch die Messer 11, 12 hindurch und springen aus den Öffnungen 56 vor. Ein Knebel 50 ist um eine Drehachse 54 in der Halbschale 2 drehbar befestigt und weist Aussparungen 55 auf, in die der vorspringende Teil der Stifte 51 eintreten kann, wenn der Knebel 50 gegenüber der in Figur 19 gezeigten Stellung auf die in den Figuren 16 und 17 gezeigte Stellung verdreht wird. In dieser Position liegt der Knebel 50 über den beiden Messern und der Sägevorsatz 1 ist hierdurch sicher arretiert. Bei dieser Ausführungsform ist die Halbschale 3 der vorhergehenden Ausführungsformen durch den Knebel 50 ersetzt, der im verriegelten Zustand zusammen mit der Halbschale 3 die Taschenform des Gehäuses des Befestigungsteils 4 bildet.

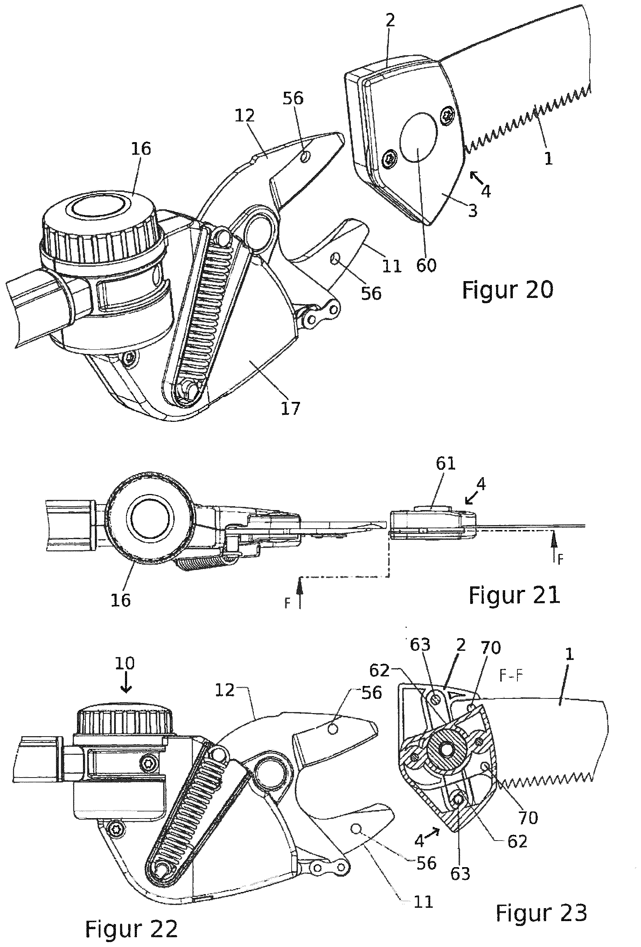

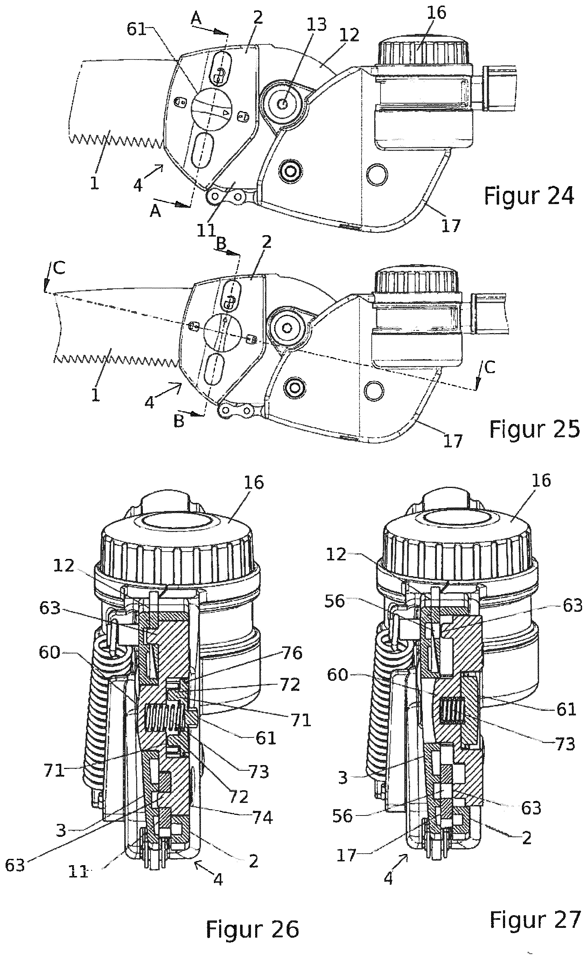

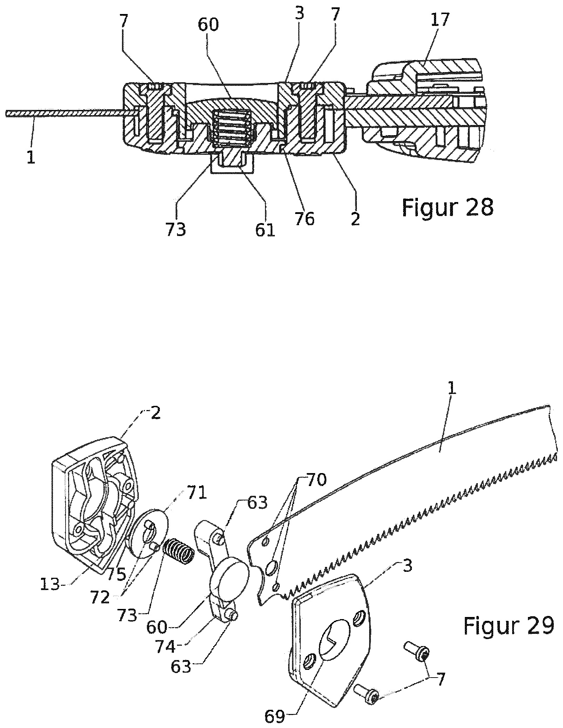

In den Figuren 20 bis 29 ist eine siebte Ausführungsform der Rasteinrichtungen gezeigt, bei der die Rastbefestigung ebenfalls nicht an dem Ansatz 19 der Gelenkschraube 13 oder deren Mutter, sondern über Bohrungen 56 in den Messern 11, 12 erfolgt, in die Stifte 63 eines U-förmigen Arretierteils 74 eingreifen können, der entlang einer Achse unter einem rechten Winkel zur Ebene des Sägeblatts 1 in der Halbschale 2 verschiebbar angeordnet ist und einen Druckknopf 60 aufweist, der durch eine Feder 73 aus der Halbschale 3 heraus vorgespannt ist. In dieser Stellung greifen die Bolzen 63 in die Bohrungen 56 der Messer 11, 12 ein und arretieren den Befestigungsteil 4 an den Messern. Der Druckknopf 60 kann durch eine Öffnung 69 in der Halbschale 3 vorspringen, die wiederum über Befestigungsschrauben 7 an der Halbschale 2 befestigt ist. Durch Eindrücken des Druckknopfes 60 können die Bolzen 63 aus den Bohrungen 56 der Messer zurückgezogen werden, wie dies in Figur 27 gezeigt ist, so dass der Befestigungsteil von den Messern 11, 12 abgezogen werden kann.

Wie dies aus Figur 26 zu erkennen ist, weist die Halbschale 2 ein mit einer Schulter an ihrer Außenseite versehene Durchbrechung auf, in der ein Drehknopf 61 koaxial zum Druckknopf 60 angeordnet ist. Die Schulter 76 nimmt die Druckkraft der Feder 73 auf. Der Drehknopf 61 ist, wie in den Figuren 24 und 25 dargestellt, zwischen einer Verriegelungsstellung und einer Freigabestellung für den Druckknopf 60 verdrehbar. Zu diesem Zweck weist der Drehknopf 61 eine drehbare Scheibe 71 mit Stiften auf, die sich in der entriegelten Stellungen an den beiden Längsseiten des U-förmigen Arretierteils 74 erstrecken, während sie im verriegelten Zustand gegen die Innenfläche des U-förmigen Arretierteils 74 anliegen und ein versehentliches Eindrücken des Druckknopfes 60 verhindern.

## Patentansprüche

1. Sägevorsatz für eine Baumschere, die einen Messerkopf (10) mit Messern (11, 12) aufweist, die über eine Gelenkschraube (13) gelenkig miteinander verbunden und zwischen einer offenen und einer Schneidstellung verschwenkbar sind, wobei der Sägevorsatz einen Befestigungsteil (4) zur Befestigung eines Sägeblatts (1) an einem Teil des Messerkopfs (10) der Baumschere aufweist, **dadurch gekennzeichnet, dass** der Befestigungsteil durch einen auf beide Messer (11, 12) in deren offenen Stellung aufsteckbaren flachen taschenförmigen Befestigungsteil (4) gebildet ist, der Schlitze (6) zur Aufnahme der Messer (11, 12) an einer ersten seiner Schmalseiten aufweist, dass auf der der ersten Schmalseite gegenüberliegenden Schmalseite Befestigungsschlitze für das dem Messerkopf (10) zugewandte Ende des Sägeblatts (1) vorgesehen sind, und dass Rasteinrichtungen (19, 20, 51, 56) zur lösbaren Rastbefestigung des Befestigungsteils (4) an dem Messerkopf (10) vorgesehen sind.

2. Sägevorsatz nach Anspruch 1, **dadurch gekennzeichnet, dass** der Befestigungsteil (4) durch zwei Halbschalen (2, 3) gebildet ist, die auf der ersten Schmalseite die Schlitze (6) aufweisen und auf der zweiten, der ersten Schmalseite gegenüberliegenden Schmalseite einen Schlitz zur Aufnahme des Sägeblatts (1) aufweisen, wobei Befestigungsschrauben zur Befestigung der beiden Halbschalen aneinander vorgesehen sind, und die Halbschalen einen Hohlraum bilden, der einerseits zur Aufnahme der Messer (11, 12) und andererseits zur Aufnahme des Sägeblatts (1) ausgebildet ist.

3. Sägevorsatz nach Anspruch 1 oder 2, **dadurch gekennzeichnet, dass** die Rasteinrichtungen (19, 20) durch einen die Gelenkschraube (13) oder deren Mutter verlängernden Ansatz (19) und ein langgestrecktes Rastelement (20; 43) gebildet sind, das an dem Befestigungsteil (4) befestigt ist und sich über die erste Schmalseite des Befestigungsteils (4) hinaus in Richtung auf den Messerkopf (10) erstreckt und am freien Ende eine Öffnung (21) aufweist, die auf den Ansatz (19) aufrastbar ist.

4. Sägevorsatz nach Anspruch 3, **dadurch gekennzeichnet, dass** das langgestreckte Rastelement durch eine elastische Blattfeder (20) gebildet ist, die an dem Befestigungsteil (4) befestigt und auf den Ansatz (19) der Gelenkschraube (13) elastisch vorgespannt ist.

5. Sägevorsatz nach Anspruch 4, **dadurch gekennzeichnet, dass** an dem Messerkopf (10) oder dem Befestigungsteil (4) Sicherungseinrichtungen (18; 31) zur Sicherung des langgestreckten Bauteils auf dem Ansatz (19) der Gelenkschraube (13) oder deren Mutter vorgesehen sind.

6. Sägevorsatz nach einem oder mehreren der Ansprüche 1 bis 4, **dadurch gekennzeichnet, dass** das Rastelement (20) durch einen in der zweiten Halbschale schwenkbar befestigten Kipphebel (46) mit einem Ansatz (49) in eine Position verschwenkbar ist, in der die Öffnung (21) von dem Ansatz (19) der Gelenkschraube (13) abgehoben ist.

7. Sägevorsatz nach einem oder mehreren der Ansprüche 1 bis 3, **dadurch gekennzeichnet, dass** das Rastelement durch ein starres, langgestrecktes Bauteil (43) gebildet ist, das sich über die erste Schmalseite des Befestigungsteils (4) hinaus erstreckt und eine Öffnung (21) zur Aufnahme des Ansatzes (19) der Gelenkschraube (13) aufweist, und dass Spanneinrichtungen (44) zum Spannen des langgestreckten Bauteils (43) gegen eine Außenfläche des Befestigungsteils (4) und auf den Ansatz (19) der Gelenkschraube vorgesehen sind.

8. Sägevorsatz nach Anspruch 7, **dadurch gekennzeichnet, dass** die Spanneinrichtungen durch einen an dem starren langgestreckten Bauteil (43) im Bereich des Befestigungsteils (4) befestigten Gewindebolzen (44) gebildet sind, der sich durch die Halbschale (2) hindurch erstreckt, dass auf der Außenseite der Halbschale (3) eine Ausnehmung (40) vorgesehen ist, durch die hindurch sich ein Drehknopf (41) erstreckt, der eine damit verbundene Mutter (45) aufweist, die auf dem Gewindebolzen (44) aufschraubbar ist und im fest aufgeschraubten Zustand das Bauteil (43) gegen die Halbschale (2) zieht, während im abgeschraubten Zustand der Mutter (45) der Drehknopf (41) durch eine Feder (42) aus der zweiten Gehäuseschale (3) heraus vorgespannt ist und durch Eindrücken in die Gehäuseschale (3) das Rastelement (43) von dem Ansatz (19) der Gelenkschraube (13) abhebt, so dass der Befestigungsteil von den Messern abziehbar ist.

9. Sägevorsatz nach Anspruch 7, **dadurch gekennzeichnet, dass** die Messer (11, 12) mit jeweiligen Bohrungen (56) versehen sind, durch die hindurch sich Verriegelungsbolzen (51; 63) erstrecken können, die in zumindest einer der Halbschalen (2, 3) in einer Ebene befestigt sind, die sich senkrecht zur Ebene der Messer (11,2) erstreckt, wobei die Verriegelungsbolzen (51; 63) durch diese Bohrungen (56) hindurch einsetzbar sind und den Befestigungsteil (4) an den Messern (11, 12) befestigen.

10. Sägevorsatz nach Anspruch 9, **dadurch gekennzeichnet, dass** die Verriegelungsbolzen (51) starr in der ersten Gehäusehälfte (2) angeordnet sind und sich bei aufgesetztem Befestigungsteil durch die Öffnungen (56) der Messer (11, 12) hindurch erstrecken, und dass die zweite Halbschale durch einen an der ersten Halbschale (2) drehbar befestigten Knebel (50) gebildet ist, der Aussparungen (55) zur Aufnahme der sich über die Messer (11, 12) hinaus erstreckenden Enden der Verriegelungsbolzen (51) aufweist und zwischen einer ersten Stellung, in der der Knebel (50) zwischen den Messern (11, 12) liegt, und einer zweiten Stellung verdrehbar ist, in der die Ausnehmungen (55) die freien Enden der Stifte (51) aufnehmen und der Knebel (50) gegen die benachbarte Fläche der Messer (11, 12) anliegt und damit die Verriegelungsbolzen (51) in den Bohrungen (56) verriegelt.

11. Sägevorsatz nach Anspruch 9 **dadurch gekennzeichnet, dass** im Inneren des Befestigungsteils (4) ein U-förmiges Arretierteil (74) angeordnet ist, das Verriegelungsbolzen (63) für den Eingriff in die Bohrungen (70) der Messer (11, 12) und einen Druckknopf (60) aufweist, der in einer Ausnehmung der Halbschale (3) in einer Richtung unter einem rechten Winkel zu Ebene der Messer (11, 12) derart beweglich angeordnet ist, dass ein Eindrücken des Druckknopfes (60) und damit des Arretierteils (74) in die erste Halbschale (2) das Lösen der Befestigungsbolzen (63) aus den Bohrungen (56) heraus ermöglicht.

12. Sägevorsatz nach Anspruch 11, **dadurch gekennzeichnet, dass** die erste Halbschale (2) eine mit einer Schulter (76) auf ihrer Außenseite versehene Durchbrechung aufweist, in der ein Drehknopf (61) angeordnet ist, der an seinem innenliegenden Ende eine Scheibe (71) mit Stiften (72) aufweist, das eine Feder zwischen der Scheibe (71) und dem U-förmigen Arretierteil angeordnet ist und den Druckknopf (60) aus der zweiten Gehäuseschale (3) heraus vorspannt, und dass die Stifte (72) in einer ersten Drehstellung des Drehknopfes gegen die Innenseite des U-förmigen Arretierteils anliegen und ein Eindrücken des Druckknopfes (60) verhindern, während die Stifte (72) in einer zweiten Drehstellung des Drehknopfes an den Längskanten des U-förmigen Verriegelungsteils (74) vorbei bewegbar sind und ein Eindrücken des Druckknopfes (60) ermöglichen.

## Claims

1. A saw blade attachment for pruning shears having a cutter head (10) with cutters (11, 12) interconnected in an articulated manner via a pivot screw (13) and being pivotable between an open position and a cutting position, wherein the saw blade attachment has a fastening part (4) for fastening a saw blade (1) to a part of the cutter head (10) of the pruning shears, **characterized in that** the fastening part is formed by a flat, pocket-shaped fastening part (4) that can be attached the two cutters (11, 12) in their open position, and has slots (6) for receiving the cutters (11, 12) at a first one of its narrow sides, that on the narrow side opposite the first narrow side, fastening slots for the end of the saw blade (1) facing the cutter head are provided, and that latching devices (19, 20, 51, 56) are provided for the detachable latching fastening of the fastening part (4) to the cutter head (10).

2. The saw blade attachment according to claim 1, **characterized in that** the fastening part (4) is formed by two half-shells (2, 3) having the slots (6) at the first narrow side, and having a slot at the second narrow side opposite the first narrow side for receiving the saw blade (1), wherein fastening screws are provided for fastening the two half-shells to one another, and the half-shells form a cavity configured for receiving the cutters (11, 12), on the one hand, and for receiving the saw blade (1), on the other.

3. The saw blade attachment according to claim 1 or 2, **characterized in that** the latching devices (19, 20) are formed by a projection (19) prolonging the pivot screw (13) or the nut thereof, and an elongate latching element (20; 43) fastened to the fastening part (4) and extending beyond the first narrow side of the fastening part (4) toward the cutter head (10) and has an opening (21) at the free end that can be snapped onto the projection (19).

4. The saw blade attachment according to claim 3, **characterized in that** the elongate latching element is formed by an elastic leaf spring (20) fastened to the fastening part (4) and being elastically pre-tensioned toward the projection (19) of the pivot screw (13).

5. The saw blade attachment according to claim 4, **characterized in that** securing means (18; 31) are provided on the cutter head (10) or the fastening part (4) for securing the elongate component to the projection (19) of the pivot screw (13) or the nut thereof.

6. The saw blade attachment according to one or more of claims 1 to 4, **characterized in that** the latching element (20) is can be pivoted by a pivot lever (46) with a projection (49) fastened to be pivotable within the second half-shell into a position in which the opening (21) of the projection (19) is lifted off from the pivot screw (13).

7. The saw blade attachment according to one or more of claims 1 to 3, **characterized in that** the latching element is formed by a rigid, elongate component (43) extending beyond the first narrow side of the fastening part (4) and having an opening (21) for receiving the projection (19) of the pivot screw (13), and that tensioning means (44) for tensioning the elongate component (43) against an outer surface of the fastening part (4) and toward the projection (19) of the pivot screw are provided.

8. The saw blade attachment according to claim 7, **characterized in that** the tensioning means are formed by a threaded bolt (44) fastened to the rigid, elongate component (43) in the area of the fastening part (4), which threaded bolt extends through the half-shell (2), that a recess (40) is provided at the outer side of the half-shell (3) through which a rotary knob (41) extends which has a nut (45) associated therewith which can be screwed upon the threaded bolt (44) and draws the component (43) against the half-shell (2) in the tightly screwed state, while in the unscrewed state of the nut (45), the rotary knob (41) is pre-tensioned out from the second housing shell (3) by a spring (42) and lifts off the latching element (43) from the projection (19) of the pivot screw (13) by pushing it into the housing shell (13), so that the fastening part can be drawn off the cutters.

9. The saw blade attachment according to claim 7, **characterized in that** the cutters (11, 12) are provided with respective bores (56) through which locking bolts (51; 63) can extend which are fastened in at least one of the half-shells (2, 3) in a plane extending perpendicular to the plane of the cutters (11, 12), wherein the locking bolts (51, 63) can be inserted through these bores (56) and fasten the fastening part (4) to the cutters (11, 12).

10. The saw blade attachment according to claim 9, **characterized in that** the locking bolts (51) are arranged to be rigid within the first housing half (2) and extend through the openings (56) of the cutters (11, 12) when the fastening part is in place on top, and that the second half-shell is formed by a handle (50) fastened to the first half-shell (2) to be rotary, which has recesses (55) for receiving the ends of the locking bolts (51) extending beyond the cutters (11, 12) and being rotatable between a first position in which the handle (50) is between the cutters (11, 12), and a second position, in which the recesses (55) receive the free ends of pins (51) and the handle (50) rests against the adjacent surface of the cutters (11, 12) and thus locks the locking bolts (51) within the bores (56).

11. The saw blade attachment according to claim 9, **characterized in that**, inside the fastening part (4), a U-shaped arresting part (74) is arranged having latching bolts (63) for the engagement in the recesses (70) of the cutters (11, 12), and a push button (60) arranged to be movable in a recess of the half-shell (3) in a direction under a right angle to the plane of the cutters (11, 12) such that a pushing in of the push button (60) and thus of the arresting part (74) into the first half-shell (2) enables the fastening bolts (63) from being detached from the bores (56).

12. The saw blade attachment according to claim 11, **characterized in that** the first half-shell (2) has a breakthrough provided with a shoulder (76) at its outer side, in which a rotary knob (61) is arranged having a disc (71) with pins (72) at its internal end, that a spring is arranged between the disc (71) and the U-shaped arresting part and pre-tensions the push button (60) out from the second housing shell (3), and that the pins (72) rest against the inner side of the U-shaped arresting part in a first rotary position of the rotary knob and prevent the push button (60) from being pushed in, while the pins (72) in a second rotary position of the rotary knob can be moved past the longitudinal edges of the U-shaped arresting part (74) and enable the push button (60) to be pushed in.

## Revendications

1. Adaptateur de sciage pour un sécateur, comportant une tête à lames (10) ayant des lames (11, 12) reliées en articulation l'une à l'autre par une vis d'articulation (13) et pouvant pivoter entre une position ouverte et une position de coupe, l'adaptateur de sciage comportant une partie de fixation (4) pour la fixation d'une lame de scie (1) sur une partie de la tête à lames (10) du sécateur, **caractérisé en ce que** la partie de fixation est formée par une partie de fixation (4) plate en forme de poche qui peut être enfichée sur les deux lames (11, 12) dans leur position ouverte et qui présente des fentes (6) pour recevoir les lames (11, 12) sur un premier de ses petits côtés, **en ce que** des fentes de fixation pour l'extrémité de la lame de scie (1) tournée vers la tête à lames (10) sont prévues sur le petit côté opposé au premier petit côté, et **en ce qu'**il est prévu des moyens d'encliquetage (19, 20, 51, 56) pour la fixation par encliquetage amovible de la partie de fixation (4) sur la tête à lames (10).

2. Adaptateur de sciage selon la revendication 1, **caractérisé en ce que** la partie de fixation (4) est formée par deux demi-coques (2, 3) qui présentent les fentes (6) sur le premier petit côté et une fente pour recevoir la lame de scie (1) sur le deuxième petit côté opposé au premier petit côté, des vis de fixation étant prévues pour fixer les deux demi-coques l'une à l'autre, et les demi-coques formant une cavité qui est réalisée, d'une part, pour recevoir les lames (11, 12) et, d'autre part, pour recevoir la lame de scie (1).

3. Adaptateur de sciage selon la revendication 1 ou 2, **caractérisé en ce que** les moyens d'encliquetage (19, 20) sont formés par un appendice (19) prolongeant la vis d'articulation (13) ou son écrou et par un élément d'encliquetage allongé (20 ; 43) qui est fixé à la partie de fixation (4) et qui s'étend au-delà du premier petit côté de la partie de fixation (4) en direction de la tête à lames (10) et qui présente à l'extrémité libre une ouverture (21) qui peut être encliquetée sur l'appendice (19).

4. Adaptateur de sciage selon la revendication 3, **caractérisé en ce que** l'élément d'encliquetage allongé est formé par un ressort à lame élastique (20) qui est fixé à la partie de fixation (4) et qui est précontraint élastiquement vers l'appendice (19) de la vis d'articulation (13).

5. Adaptateur de sciage selon la revendication 4, **caractérisé en ce que** des moyens de blocage (18 ; 31) sont prévus sur la tête à lames (10) ou sur la partie de fixation (4) pour bloquer le composant allongé sur l'appendice (19) de la vis d'articulation (13) ou de son écrou.

6. Adaptateur de sciage selon l'une ou plusieurs des revendications 1 à 4, **caractérisé en ce que** l'élément d'encliquetage (20) peut être pivoté par un levier pivotant (46), fixé de manière pivotante dans la deuxième demi-coque et présentant un appendice (49), jusque dans une position dans laquelle l'ouverture (21) est soulevée par rapport à l'appendice (19) de la vis d'articulation (13).

7. Adaptateur de sciage selon l'une ou plusieurs des revendications 1 à 3, **caractérisé en ce que** l'élément d'encliquetage est formé par un composant allongé rigide (43) s'étendant au-delà du premier petit côté de la partie de fixation (4) et présentant une ouverture (21) pour recevoir l'appendice (19) de la vis d'articulation (13), et **en ce qu'**il est prévu des moyens de serrage (44) pour serrer le composant allongé (43) contre une surface extérieure de la partie de fixation (4) et sur l'appendice (19) de la vis d'articulation.

8. Adaptateur de sciage selon la revendication 7, **caractérisé en ce que** les moyens de serrage sont formés par un boulon fileté (44) fixé au composant allongé rigide (43) au niveau de la partie de fixation (4) et s'étendant à travers la demi-coque (2), **en ce que** sur le côté extérieur de la demi-coque (3) est prévu un évidement (40) à travers lequel s'étend un bouton rotatif (41) présentant un écrou (45) qui est relié à celui-ci et qui peut être vissé sur le boulon fileté (44) et qui, à l'état vissé fermement, tire le composant (43) contre la demi-coque (2), tandis qu'à l'état dévissé de l'écrou (45), le bouton rotatif (41) est précontraint par un ressort (42) hors de la deuxième coque de boîtier (3) et, par enfoncement dans la coque de boîtier (3), l'élément d'encliquetage (43) se soulève de l'appendice (19) de la vis d'articulation (13), de sorte que la partie de fixation peut être retirée des lames.

9. Adaptateur de sciage selon la revendication 7, **caractérisé en ce que** les lames (11, 12) sont pourvues de perçages respectifs (56) à travers lesquels peuvent passer des goujons de verrouillage (51 ; 63) qui sont fixés dans l'une au moins des demi-coques (2, 3) dans un plan s'étendant perpendiculairement au plan des lames (11, 2), les goujons de verrouillage (51 ; 63) pouvant être insérés à travers lesdits perçages (56) et fixant la partie de fixation (4) aux lames (11, 12).

10. Adaptateur de sciage selon la revendication 9, **caractérisé en ce que** les goujons de verrouillage (51) sont disposés de manière rigide dans la première moitié de boîtier (2) et s'étendent à travers les ouvertures (56) des lames (11, 12) lorsque la partie de fixation est mise en place, et **en ce que** la deuxième demi-coque est formée par une manette (50) qui est fixée de manière rotative à la première demi-coque (2) et qui présente des échancrures (55) pour recevoir les extrémités des goujons de verrouillage (51) s'étendant au-delà des lames (11, 12) et qui peut tourner entre une première position dans laquelle la manette (50) se trouve entre les lames (11, 12) et une deuxième position dans laquelle les évidements (55) reçoivent les extrémités libres des tiges (51) et la manette (50) repose contre la surface adjacente des lames (11, 12), verrouillant ainsi les goujons de verrouillage (51) dans les perçages (56).

11. Adaptateur de sciage selon la revendication 9, **caractérisé en ce qu'**une partie d'arrêt (74) en forme de U est disposée à l'intérieur de la partie de fixation (4) et présente des goujons de verrouillage (63) pour l'engagement dans les perçages (70) des lames (11, 12) et un bouton poussoir (60) qui est disposé dans un évidement de la demi-coque (3) de manière mobile dans une direction selon un angle droit par rapport au plan des lames (11, 12) de telle sorte qu'un enfoncement du bouton-poussoir (60) et donc de la partie d'arrêt (74) dans la première demi-coque (2) permet de libérer les goujons de fixation (63) hors des perçages (56).

12. Adaptateur de sciage selon la revendication 11, **caractérisé en ce que** la première demi-coque (2) présente une traversée munie d'un épaulement (76) sur son côté extérieur, dans laquelle est disposé un bouton rotatif (61) qui présente à son extrémité intérieure un disque (71) ayant des tiges (72), **en ce qu'**un ressort est disposé entre le disque (71) et la partie d'arrêt en forme de U et précontraint le bouton-poussoir (60) hors de la deuxième coque de boîtier (3), et **en ce que** les tiges (72), dans une première position de rotation du bouton rotatif, s'appuient contre le côté intérieur de la partie d'arrêt en forme de U et empêchent un enfoncement du bouton-poussoir (60), tandis que, dans une deuxième position de rotation du bouton rotatif, les tiges (72) peuvent être déplacées en passant devant les bords longitudinaux de la partie d'arrêt en forme de U (74) et permettent un enfoncement du bouton-poussoir (60).
